# EUROPÄISCHE PATENTSCHRIFT

(11) **EP 0 860 976 B1**
(45) Veröffentlichungstag und Bekanntmachung des Hinweises auf die Patenterteilung: **14.08.2002**
(21) Anmeldenummer: 98440024.2
(22) Anmeldetag: 12.02.1998
(51) Int. Cl.: H04M 15/28, H04M 15/30

(54) **Vorrichtung und Verfahren zur individuellen Gebührenanzeige an TK-Endgeräten**
Device and method for individual charging meter display in telecommunication terminals
Dispositif et procédé d'indication individuelle de taxation dans des terminaux de télécommunication

(30) Priorität: 21.02.1997 DE 19707002
(43) Veröffentlichungstag der Anmeldung: 26.08.1998
(73) Patentinhaber: ALCATEL, 75008 Paris (FR)
(72) Erfinder: Krank, Lothar, 71229 Leonberg (DE); Stahl, Uwe, 71229 Leonberg (DE); Lautenschlager, Wolfgang, 71287 Weissach/Flacht (DE); Weik, Hartmut, 70195 Stuttgart (DE)
(74) Vertreter: Rausch, Gabriele, Dr.

(56) Entgegenhaltungen:
- EP-A- 0 115 924
- EP-A- 0 601 575
- EP-A- 0 624 023
- WO-A-92/11725
- US-A- 4 585 904
- US-A- 4 813 065
- US-A- 5 570 417

## Beschreibung

Die Erfindung betrifft eine Einrichtung zur Gebührenanzeige an einem Telekommunikations(TK)-Endgerät mit einem Rechner zur Gebührenermittlung und einer Anzeigeeinheit zur Anzeige der ermittelten Gebühren,

Derartige Einrichtungen sind allgemein bekannt. Ihre Funktionsweise ist beispielsweise im "Lehrbuch der Fernmeldetechnik", Band 1, fünfte Ausgabe 19..., Fachverlag Schiele & Schön GmbH, Berlin, Seiten 614 bis 620 beschrieben.

US-A-4,585,904 offenbart eine Einrichtung zur Gebührenanzeige an einem Telekommunikations-Endgerät mit einem Rechner zur Gebührenermittlung und einer Anzeigeneinheit zur Anzeige der ermittelten Gebühren. Des weiteren ist ein Berechnungsmodul zur Berechnung eines kundenspezifischen Tarifs vorgesehen, welches aus einem ersten Datenspeicher kundenspezifische Parameterdaten, und aus einem Programmspeicher vorgebbare Tarif-Algorithmen abfragen und damit ein für eine individuelle TK-Verbindung aktuelles Entgelt berechnen und entsprechende Informationssignale der Anzeigeeinheit zuführen kann.

US-A-4,813,065 beschreibt ein computerisiertes Telefonsystem, das automatisch die Kosten für Ferngespräche innerhalb der USA berechnet, und die Kosteninformation zusammen mit der gewählten Nummer, dem Datum, der Zeit und der Dauer des Gesprächs auf einem Display ausgibt.

In EP-A-0 115 924 schließlich wird ein System zur Anzeige von Telefongesprächskosten offenbart, das einen Speicher zur Speicherung von Gebührencodes aufweist. Über Detektoren werden Anfang und Ende des Telefongesprächs bestimmt. Eine Rechnereinheit berechnet die Kosten des Telefongesprächs aufgrund dieser und weiterer Variablen und gibt die Informationen auf einem Display aus.

Bei den bekannten TK-Systemen erhält ein Netzteilnehmer üblicherweise Gebühreninformationen vorwiegend über Gebührenimpulse, die am jeweiligen TK-Endgerät entweder lediglich summiert oder nachverarbeitet werden. Die Anzahl der Impulse bzw. die entsprechenden Gebührenbeträge sind heutzutage abhängig von der Zeitdauer und der Distanz der gebührenpflichtigen TK-Verbindung. Bei sekundengenauer Abrechnung können diese Impulse nicht mehr für die Anzeige beim Teilnehmer herangezogen werden.

Neben unterschiedlichen Tarifen für verschiedene Tageszeiten sowie Tarifunterschiede zwischen Werktagen und Feiertagen werden zunehmend komplexere und differenziertere Tarifmodelle eingeführt. Dabei müssen noch viele andere Parameter berücksichtigt werden, beispielsweise Großkundenrabatte und dergleichen, und die Tarifmodelle sollen in Zukunft auch diversifizierbar oder gar individualisierbar sein. Dafür müssen aber die anfallenden Informationen, wie z. B. Gebührenbeträge, während oder nach einer TK-Verbindung entsprechend verarbeitet werden. Eine Anzeige dieser aus komplexen Berechnungen hervorgegangenen aktuellen Gebührenbeträge während oder kurz nach der Beendigung einer TK-Verbindung ist bei derzeitigen TK-Endgeräten nicht möglich. Allenfalls können diese Informationen verspätet über das entsprechende TK-Netzwerk oder andere Kommunikationsmedien an den Teilnehmer übermittelt werden.

Aufgabe der vorliegenden Erfindung ist es demgegenüber, eine Einrichtung zur Gebührenanzeige an einem TK-Endgerät der eingangs beschriebenen Art mit möglichst einfachen Mitteln dahingehend zu modifizieren, daß eine individuelle Gebührenanzeige am TK-Endgerät ermöglicht wird.

Erfindungsgemäß wird diese Aufgabe dadurch gelöst, daß die Übermittlung von Tarifinformationen lediglich bei Veränderungen der Tarifinformation vorgenommen wird und die Tarifinformation zwischenzeitlich in einem Berechnungsmodul speicherbar und bei jedem Verbindungsaufbau daraus abrufbar ist.

Die Erfindungsidee geht davon aus, daß Informationen über das von einem Teilnehmer gültige Tarifmodell nicht nur im TK-Netzwerk vorgehalten werden, sondern, vor allem bei den Standardtarifmodellen, lokal im TK-Endgerät vor Ort zur Verfügung gestellt werden. Damit wird eine ganz erheblich erhöhte Flexibilität für die Einführung neuer Tarifstrukturen geschaffen, wie beispielsweise individuelle Spezialtarife für bestimmte Kunden oder Kundengruppen, zeitlich begrenzte Werbemaßnahmen mit herabgesetzten Tarifen und dergleichen.

Bei einer besonders kompakten Ausführungsform der erfindungsgemäßen Einrichtung ist das Berechnungsmodul im TK-Endgerät integriert. Dadurch kann die erfindungsgemäße Einrichtung besonders platzsparend und auf technisch einfache Weise realisiert werden. Bei alternativen Ausführungsformen ist das Berechnungsmodul separat vom TK-Endgerät angeordnet. Dies hat insbesondere den Vorteil, daß bereits vorhandene alte TK-Endgeräte weiterbenutzt werden können.

Bei einer besonders vorteilhaften Weiterbildung dieser Ausführungsform ist vorgesehen, daß eine gesonderte, an das Berechnungsmodul angeschlossene Anzeigeeinheit zur Anzeige der ermittelten Gebühren vorgesehen ist, die nicht im TK-Endgerät integriert ist. Dadurch wird das Erfordernis von besonderen Schnittstellen zu eventuell im TK-Endgerät vorhandenen Anzeigeeinheiten vermieden. Außerdem sind damit auch einfachste TK-Endgeräte ohne jegliche Anzeigeeinheit verwendbar.

Bei einer weiteren besonders bevorzugten Ausführungsform ist der erste Datenspeicher mit den kundenspezifischen Parameterdaten als Kundenmodul im Berechnungsmodul integriert. Dadurch wird die erfindungsgemäße Einrichtung besonders kompakt und die Daten sind immer unmittelbar verfügbar.

Bei einer Weiterbildung dieser Ausführungsform ist das Kundenmodul austauschbar gestaltet. Dies hat den Vorteil, daß bei Tarifänderungen einfach das alte Kundenmodul durch ein neues ersetzt werden kann.

Bei Weiterbildungen der obengenannten Ausführungsform der erfindungsgemäßen Einrichtung kann der erste Datenspeicher ein Festspeicher sein. Dadurch wird eine komplizierte Ladeprozedur zwischen dem TK-Netz und dem TK-Endgerät vermieden, was ein simples Handling für den Benutzer ermöglicht.

Bei alternativen Weiterbildungen ist der erste Datenspeicher durch Informationssignale aus einem TK-Netzwerk überschreibbar. Auf diese Weise sind Tarifänderungen leichter, zentralisiert und ohne zeitlichen Verzug sofort ladbar.

Der überschreibbare erste Datenspeicher kann bei Weiterbildungen in Form einer Magnetbandkassette (Cartridge) vorliegen. Diese haben derzeit ein besonders großes Speichervolumen, so daß viele technische Optionen genutzt werden können.

Alternativ kann der überschreibbare erste Datenspeicher aber auch in Form einer Chipkarte vorliegen, bei der gleichzeitig ein Prozessor zur Verarbeitung der Tarif-Algorithmen integriert sein kann.

Bei einer besonders kompakten Ausführungsform liegt das Kundenmodul in Form einer Chipkarte vor, auf der insbesondere ein Kundentarifrechner integriert ist.

Besonders bevorzugt ist auch eine Ausführungsform der erfindungsgemäßen Einrichtung, die sich dadurch auszeichnet, daß der erste Datenspeicher mit den kundenspezifischen Parameterdaten und/oder der Programmspeicher mit den vorgebbaren Tarif-Algorithmen räumlich entfernt vom Berechnungsmodul angeordnet ist, und daß die Parameterdaten und/oder die Tarif-Algorithmen über ein TK-Netzwerk zum Berechnungsmodul übermittelt werden können. Damit lassen sich die betreffenden TK-Endgeräte einfach und vor allem zentral mit Informationen und Updatings beschicken und es werden Ladevorgänge durch den TK-Netzbetreiber bei allen angeschlossenen Nutzern problemlos ermöglicht.

Besonders bevorzugt ist auch eine Ausführungsform, bei der eine Zähleinrichtung zur Ermittlung der beim TK-Endgerät in einem Abrechnungszeitraum aufgelaufenen Entgelt-Summe vorgesehen ist. Dadurch ergibt sich für den Nutzer des entsprechenden TK-Endgeräts eine Abfragemöglichkeit für die bisher aufgelaufenen Vermittlungs- und sonstigen Dienstleistungsentgelte, die dem TK-Netzbetreiber geschuldet werden.

Bei einer besonders vorteilhaften Weiterbildung dieser Ausführungsform ist vorgesehen, daß aus dem ersten Datenspeicher kundenspezifische Verbrauchs-Schwellwerte abrufbar sind, nach deren Überschreitung günstigere kundenspezifische Tarife für die Berechnung des aktuellen Entgelts zur Anwendung kommen. Damit läßt sich auf einfache Weise eine an das individuelle Verbrauchsverhalten angepaßte Rabattierung einrichten, die als Anreiz zu einer höheren Nutzung des entsprechenden TK-Dienstes und damit zu einer besseren Auslastung des entsprechenden Dienstleistungssystemes und zu einer Umsatzsteigerung des Diensteanbieters dient.

Besonders vorteilhaft ist auch eine Ausführungsform der erfindungsgemäßen Einrichtung, bei der eine Einrichtung zur Rufnummernanalyse vorgesehen ist. Dadurch können beispielsweise unterschiedliche Tarifzonen automatisch ermittelt werden und in die Berechnung der Gebühren einfließen.

Eine besonders bevorzugte Weiterbildung dieser Ausführungsform sieht vor, daß aus dem ersten Datenspeicher kundenspezifische Zielrufnummern abrufbar sind, bei deren Anwahl durch das TK-Endgerät ein günstigerer kundenspezifischer Tarif als bei allen übrigen Zielrufnummern zur Anwendung kommt. Damit kann der Verbrauchsanreiz beim Kunden im Hinblick auf eine erhöhte Nutzung der angebotenen TK-Dienstleistung weiter gesteigert werden.

Bei einer bevorzugten Ausführungsform der erfindungsgemäßen Einrichtung schließlich ist ein weiterer Datenspeicher vorgesehen, aus dem für alle Teilnehmer des TK-Netzwerkes gemeinsam gültige Parameterdaten abgerufen werden können, beispielsweise Entfernung der Verbindungen, Tarifpakete, Uhrzeit, Datum etc.. Damit ist ein komplettes, generell gültiges Tarifmodell für eine aktuelle Entgeltberechnung verfügbar.

In den Rahmen der Erfindung fällt auch ein Verfahren zum Betrieb der oben beschriebenen Einrichtung, das dadurch gekennzeichnet ist, daß während des Aufbaus einer TK-Verbindung kundenspezifische Parameterdaten aus dem ersten Datenspeicher in das Berechnungsmodul geladen werden, mittels eines aus einem Programmspeicher abgerufenen Tarif-Algorithmus das aktuelle Entgelt für die TK-Verbindung berechnet und auf der Anzeigeeinheit angezeigt wird.

Bei einer besonders bevorzugten Variante des erfindungsgemäßen Verfahrens ist vorgesehen, daß geänderte kundenspezifische Parameterdaten automatisch von einem Zentralrechner über das TK-Netzwerk in das Kundenmodul geladen werden. Dadurch können Tarifänderungen definiert und zeitlich unmittelbar umgesetzt oder aber auch zeitgesteuert in das TK-Netzwerk eingegeben werden. Eine weitere Möglichkeit der Anwendung dieser Verfahrensvariante besteht darin, daß eine Tarifänderung bei der nächsten erfolgenden Benutzung eines TK-Endgerätes in den entsprechenden Parameterspeicher bzw. den Programmspeicher für die Tarif-Algorithmen eingegeben werden kann. Bei bestimmten Kunden kann die geplante Änderung aber auch außer der Reihe schon früher oder zu beliebigen anderen Zeitpunkten realisiert und dann zu einem bestimmten Zeitpunkt aktiviert werden.

Im Zusammenhang mit der Gewährung von günstigeren kundenspezifischen Tarifen bei Überschreitung von bestimmten Verbrauchs-Schwellwerten ist es vorteilhaft, wenn diese Schwellwerte aus einer Statistik des Verbrauchsverhaltens des jeweiligen Kunden im vorangegangenen Abrechnungszeitraum ermittelt werden. Dadurch kann ein für den Diensteanbieter besonders wünschenswertes Nutzungsverhalten des jeweiligen Endverbrauchers speziell honoriert werden.

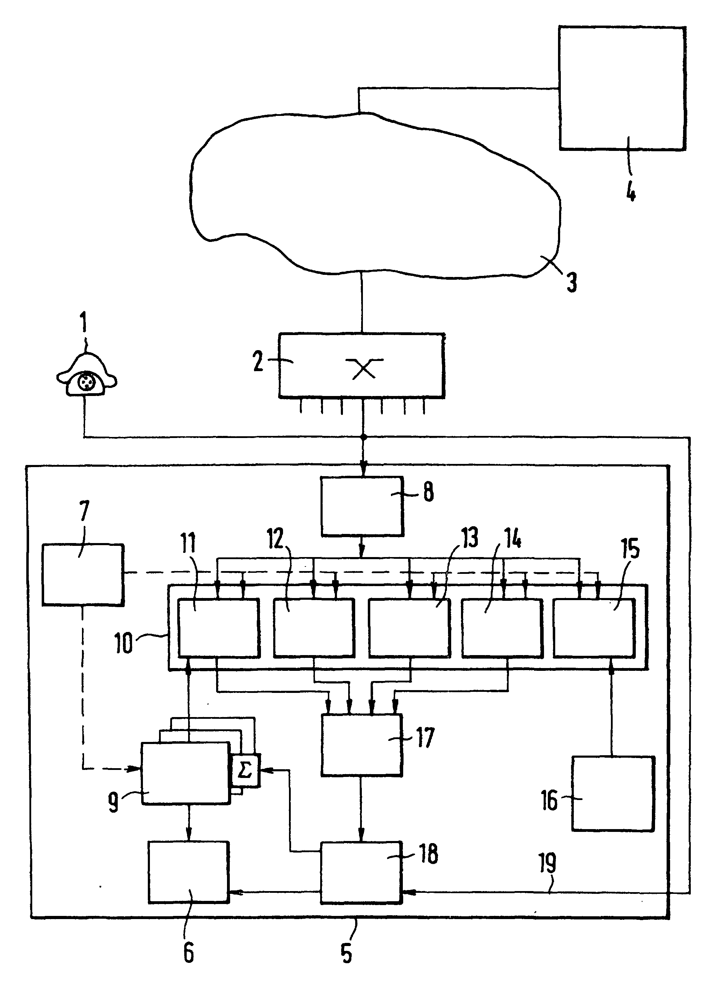

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. In der Figur ist ein Funktionsschema für eine erfindungsgemäße Realisierung einer aktuellen Gebührenanzeige auf der Basis lokal im Endgerät vorhandener Informationen dargestellt.

Die Grundidee beim erfindungsgemäßen System besteht darin, daß für einen Teilnehmer an einem TK-Netzwerk nicht nur ein generell im Netz vorgehaltenes Tarifmodell gültig sein soll, sondern daß insbesondere auch bei verschiedenen Standardtarifmodellen ein individueller Tarif auch lokal im TK-Endgerät vor Ort zur Verfügung gestellt werden soll. Sobald bei der Berechnung von Benutzungsgebühren die Distanz zwischen den betreffenden TK-Endgeräten eine Rolle spielt, muß eine solche vorgehaltene Information individuell dem jeweiligen Standort des TK-Endgerätes angepaßt sein.

Im folgenden werden zwei in den Rahmen der vorliegenden Erfindung fallende Möglichkeiten vorgestellt, die notwendigen Informationen über ein Tarifmodell lokal am TK-Endgerät vorzuhalten:
1. Durch ein beim Betreiber eines TK-Netzwerkes zu beziehendes Einsteckmodul wird die Tarifinformation direkt in das TK-Endgerät eingebracht. Der Netzbetreiber kann beim Laden dieses Einsteckmoduls schon den zukünftigen Standort berücksichtigen. Neben einem solchen Einsteckmodul ist auch ein separates Gerät denkbar ähnlich dem heute bekannten separaten Gebührenzähler. Damit würde kein neues Endgerät notwendig.
2. Die Information über das Tarifmodell wird in der Verbindungsaufbauphase von Nutzverbindungen oder mittels Nutzverbindungs-unabhängiger Ladeverbindungen vom TK-Netzwerk in das TK-Endgerät geladen. Diese Methode hat gegenüber der ersten zwei Vorteile. Zum einen wird dem TK-Endgerät vom TK-Netzwerk her mitgeteilt, wo im TK-Netzwerk das TK-Endgerät lokalisiert ist, wobei das TK-Endgerät ohne Änderung portabel bleibt, zum anderen können Tarifmodelle zentral im TK-Netzwerk geändert werden und sind dann sofort verfügbar.

Beide Methoden haben ihre Berechtigung. Die erste Methode bringt geringeren Aufwand im TK-Netzwerk und ist vor allem bei TK-Endgeräten, die im Grunde nicht portabel verwendet werden sollen, angebracht. Die zweite Methode erhöht die Flexibilität bei späteren Veränderungen durch den Netzbetreiber.

Eine dritte denkbare Methode stellt ein Zwischending zwischen den beiden oben beschriebenen dar: Dabei wird die Information wie unter 2. vom TK-Netzwerk in das TK-Endgerät geladen, wodurch die volle Flexibilität für den Netzbetreiber erhalten bleibt. Jedoch geschieht dieses "Herunterladen" des Tarifs nicht bei jedem Verbindungsaufbau, sondern lediglich bei Veränderungen des Tarifmodells. In den Zeiten zwischen diesen Veränderungen bleibt dann die Tarifinformation in einem Modul, das wie unter 1. beschrieben als Einsteckmodul ausgeführt sein kann, abgespeichert und wird bei jedem Verbindungsaufbau vom TK-Endgerät abgerufen. Auf diese Weise können auch die für die erste Methode beschriebenen Vorteile genutzt werden.

Bei sämtlichen Methoden ist aber sinnvollerweise immer ein Anzeigegerät vorhanden, auf dem die jeweils errechnete Gebühr am TK-Endgerät oder in dessen unmittelbarer räumlicher Nähe zur Anzeige gebracht wird und damit dem Benutzer Gelegenheit gegeben wird, auf das sich aufsummierende aktuelle Entgelt für die TK-Verbindung zu reagieren.

Die Abbildung zeigt eine mögliche Realisierung der erfindungsgemäßen Einrichtung zur individuellen Gebührenanzeige: Ein Telekommunikations(TK)-Endgerät 1 ist über eine Vermittlungseinheit 2 mit einem TK-Netzwerk 3 verbunden, welches von einem Zentralrechner 4 betrieben und gewartet wird. Zur Entgeltberechnung und Anzeige für jede individuelle TK-Verbindung des TK-Endgerätes 1 ist ein Berechnungsmodul 5 mit dem TK-Endgerät 1 verbunden.

Das Berechnungsmodul 5 im gezeigten Ausführungsbeispiel enthält einen ersten Datenspeicher 7, der beispielsweise als einschiebbares Kundenmodul ausgeführt sein kann. Über das Kundenmodul werden kundenspezifische Daten in die Berechnung der Verbindungsentgelte eingebracht. Solche Daten sind z. B. die Lage im Netz (bei Distanzabhängigkeit der Vergebührung) oder vom Netz gewährte Sondertarife etc. Diese Information ist entweder lokal gespeichert, lokal eingegeben (Chipkarte) oder wird vom Netzwerk 3 her geladen. Auch Kombinationen dieser Mechanismen sind denkbar.

In einem Programmspeicher 10 sind vorgebbare Tarif-Algorithmen abgespeichert, aus denen in einem Kundentarifrechner 17 zusammen mit den aus dem ersten Datenspeicher 7 abgerufenen kundenspezifischen Parameterdaten für jede individuelle TK-Verbindung ein aktuelles Entgelt berechnet wird. Das Ergebnis wird einem Anzeigerechner 18 zugeführt, der es einerseits in geeigneter Form an eine Anzeigeeinheit 6 weiterreicht, wo es für den Nutzer des TK-Endgerätes 1 sichtbar gemacht werden kann, und andererseits in eine Zählereinrichtung 9 eingibt, in der die in einem bestimmten Abrechnungszeitraum aufgelaufene Entgeltsumme gespeichert wird, die ebenfalls über die Anzeigeeinheit 6 sichtbar gemacht werden kann.

Der Kundentarifrechner 17 kann ebenso wie der Datenspeicher 7 auf einer Chipkarte integriert sein.

Der Kundentarif selbst wird durch eine Reihe von Faktoren bestimmt, die in den verschiedenen "Modulatoren" berücksichtigt werden. Der daraus abgeleitete Tarif wird unter Einbeziehung weiterer Information (vor allem der Zeitdauer) in eine Gebühr umgerechnet und zur Anzeige gebracht. Im vorliegenden Beispiel ist ein entfernungsabhängiger Modulator 11, ein volumenabhängiger Modulator 12, ein Tarifpaketmodulator 13, ein zielabhängiger Modulator 14 und ein zeitabhängiger Modulator 15 vorgesehen. Außerdem können aus einem weiteren Datenspeicher 16 für alle Teilnehmer des TK-Netzwerks 3 gemeinsam gültige Parameterdaten wie beispielsweise Datum, Uhrzeit, Zeittakt, Tarifpakete, Entfernung von Verbindungen usw. in den Programmspeicher 10 geladen werden und bei der aktuellen Entgeltberechnung Berücksichtigung finden.

Um beispielsweise für eine bestimmte Anzahl von Zielrufnummern günstigere kundenspezifische Tarife einfließen zu lassen, ist im Berechnungsmodul 5 auch eine Einrichtung 8 zur Rufnummernanalyse vorgesehen. Die jeweiligen tarifbegünstigten Zielrufnummern können aus dem ersten Datenspeicher 7 dem Programmspeicher 10 zugeführt werden.

Zahlreiche zusätzliche Merkmale wie Bildung der Gesamtsumme der Entgelte, Speicherung der Summen der letzten n Abrechnungszeiträume, Rücksetzen des aktuellen Summenzählers in Abhängigkeit vom Abrechnungszeitraum, Speicherung von Einzelgebühren etc. sind je nach angestrebtem Komfort möglich und durch die entsprechenden Verbindungspfeile in der Figur angedeutet.

Bei Ausführungsformen der Erfindung kann beispielsweise in der Einrichtung 8 zur Rufnummernanalyse auch ein entsprechender entfernungsabhängiger Basistarif eingespeichert sein.

Über eine Leitung 19 ist auch ein direkter Zugriff auf den Anzeigerechner 18 zum Zwecke der Durchschaltung, Auslösung oder ähnlichen Operationen vom TK-Endgerät 1 oder vom Zentralrechner 4 aus vorgesehen.

## Patentansprüche

1. Einrichtung zur Gebührenanzeige an einem Telekommunikations(TK)-Endgerät (1) mit einem Rechner (17) zur Gebührenermittlung und einer Anzeigeeinheit (6) zur Anzeige der ermittelten Gebühren, wobei ein Berechnungsmodul (5) zur Berechnung eines kundenspezifischen Tarifs vorgesehen ist, das so ausgestaltet ist, daß es aus einem ersten Datenspeicher (7) kundenspezifische Parameterdaten und aus einem separaten Programmspeicher (10) vorgebbaren Tarif-Algorithmen abfragt, und daß es damit ein für eine individuelle TK-Verbindung aktuelles Entgelt berechnet und entsprechende Informationssignale der Anzeigeeinheit (6) zuführt, wobei der erste Datenspeicher (7) mit den kundenspezifischen Parameterdaten und/oder der Programmspeicher (10) mit den vorgebbaren Tarif-Algorithmen räumlich entfernt vom Berechnungsmodul (5) angeordnet ist, und die Parameterdaten und/oder die Tarif-Algorithmen als Tarifinformation über ein TK-Netzwerk (3) zum Berechnungsmodul (5) übermittelbar sind,
**dadurch gekennzeichnet, daß** die Einrichtung so ausgestaltet ist, daß die Übermittlung lediglich bei Veränderungen der Tarifinformation vorgenommen wird, und die Tarifinformation zwischenzeitlich in dem Berechnungsmodul (5) speicherbar und bei jedem Verbindungsaufbau daraus abrufbar ist.

2. Einrichtung nach Anspruch 1, **dadurch gekennzeichnet, daß** das Berechnungsmodul im TK-Endgerät integriert ist.

3. Einrichtung nach Anspruch 1, **dadurch gekennzeichnet, daß** das Berechnungsmodul (5) separat vom TK-Endgerät (1) angeordnet ist.

4. Einrichtung nach Anspruch 3, **dadurch gekennzeichnet, daß** eine gesonderte, an das Berechnungsmodul (5) angeschlossene Anzeigeeinheit (6) zur Anzeige der ermittelten Gebühren vorgesehen ist, die nicht im TK-Endgerät (1) integriert ist.

5. Einrichtung nach einem der vorhergehenden Ansprüche, **dadurch gekennzeichnet, daß** der erste Datenspeicher (7) mit den kundenspezifischen Parameterdaten als Kundenmodul im Berechnungsmodul (5) integriert ist.

6. Einrichtung nach Anspruch 5, **dadurch gekennzeichnet, daß** das Kundenmodul austauschbar ist.

7. Einrichtung nach Anspruch 5 oder 6, **dadurch gekennzeichnet, daß** der erste Datenspeicher (7) ein Festspeicher ist.

8. Einrichtung nach Anspruch 5 oder 6, **dadurch gekennzeichnet, daß** der erste Datenspeicher (7) durch Informationssignale aus einem TK-Netzwerk (3) überschreibbar ist.

9. Einrichtung nach Anspruch 8, **dadurch gekennzeichnet, daß** der erste Datenspeicher (7) in Form einer Magnetbandkassette (Cartrigde) vorliegt.

10. Einrichtung nach Anspruch 8, **dadurch gekennzeichnet, daß** der erste Datenspeicher (7) in Form einer Chipkarte vorliegt.

11. Einrichtung nach einem der Ansprüche 5 bis 10, **dadurch gekennzeichnet, daß** das Kundenmodul in Form einer Chipkarte vorliegt, auf der insbesondere ein Kundentarifrechner (17) integriert ist.

12. Einrichtung nach einem der vorhergehenden Ansprüche, **dadurch gekennzeichnet, daß** der Programmspeicher (10) aus verschiedenen Modulatoren aufgebaut ist, insbesondere aus einem entfernungsabhängigen Modulator (11) und/oder einem volumenabhängigen Modulator (12) und(oder einem Tarifpaketmodulator (13) und/oder einem zielabhängigen Modulator (14) und/oder einem zeitabhängigen Modulator (15).

13. Einrichtung nach einem der vorhergehenden Ansprüche, **dadurch gekennzeichnet, daß** eine Zähleinrichtung (9) zur Ermittlung der beim TK-Endgerät (1) in einem Abrechnungszeitraum aufgelaufenen Entgelt-Summe vorgesehen ist.

14. Einrichtung nach Anspruch 13, **dadurch gekennzeichnet, daß** aus dem ersten Datenspeicher (7) kundenspezifische Verbrauchs-Schwellwerte abrufbar sind, nach deren Überschreitung günstigere kundenspezifische Tarife für die Berechnung des aktuellen Entgelts zur Anwendung kommen.

15. Einrichtung nach einem der vorhergehenden Ansprüche, **dadurch gekennzeichnet, daß** eine Einrichtung (8) zur Rufnummernanalyse vorgesehen ist.

16. Einrichtung nach Anspruch 15, **dadurch gekennzeichnet, daß** aus dem ersten Datenspeicher (7) kundenspezifische Zielrufnummern abrufbar sind, bei deren Anwahl durch das TK-Endgerät (1) ein günstigerer kundenspezifischer Tarif als bei anderen Zielrufnummern zur Anwendung kommt.

17. Einrichtung nach einem der vorhergehenden Ansprüche, **dadurch gekennzeichnet, daß** ein weiterer Datenspeicher (16) vorgesehen ist, aus dem für alle Teilnehmer des TK-Netzwerkes (3) gemeinsam gültige Parameterdaten abgerufen werden können, beispielsweise Entfernung der Verbindungen, Tarifpakete, Uhrzeit, Datum etc..

18. TK-Endgerät (1) mit einer Einrichtung zur Gebührenanzeige nach einem der vorhergehenden Ansprüche, wobei ein Berechnungsmodul (5) zur Berechnung eines kundenspezifischen Tarifs vorgesehen ist, **dadurch gekennzeichnet, daß** Mittel zum Empfang von kundenspezifischen Parameterdaten und/oder Tarif-Algorithmen aus räumlich entfernt angeordneten Speichern (7, 10) vorgesehen sind, die über ein TK-Netzwerk (3) zu dem Berechnungsmodul (5) übermittelbar sind.

19. Verfahren zum Betrieb einer Einrichtung zur Gebührenanzeige an einem Telekommunikations(TK)-Endgerät (1), die einen Rechner (17) zur Gebührenermittlung und eine Anzeigeeinheit (6) zur Anzeige der ermittelten Gebühren aufweist, wobei bei dem Verfahren ein Berechnungsmodul (5), das zur Berechnung eines kundenspezifischen Tarifs dient, aus einem ersten Datenspeicher (7) kundenspezifische Parameterdaten und aus einem separaten Programmspeicher (10) vorgebbare Tarif-Algorithmen abfragt, das Berechnungsmodul damit ein für eine individuelle TK-Verbindung aktuelles Entgelt berechnet und entsprechende Informationssignale der Anzeigeeinheit (6) zuführt, und Parameterdaten und/oder die Tarif-Algorithmen als Tarifinformation über ein TK-Netzwerk (3) vom ersten Datenspeicher (7) mit den kundenspezifischen Parameterdaten und/oder dem Programmspeicher (10) mit den vorgebbaren Tarif-Algorithmen zum Berechnungsmodul (5), das räumlich entfernt angeordnet ist, übermittelt werden,
**dadurch gekennzeichnet, daß** die Übermittlung lediglich bei Veränderungen der Tarifinformation vorgenommen wird, und daß die Tarifinformation zwischenzeitlich in dem Berechnungsmodul (5) derart gespeichert wird, daß sie bei jedem Verbindungsaufbau daraus abrufbar ist.

20. Verfahren nach Anspruch 19 zum Betrieb einer Einrichtung nach einem der Ansprüche 8 bis 11, **dadurch gekennzeichnet, daß** geänderte kundenspezifische Parameterdaten automatisch von einem Zentralrechner (4) über das TK-Netzwerk (3) in das Kundenmodul geladen werden.

21. Verfahren nach Anspruch 19 oder 20 zum Betrieb einer Einrichtung nach Anspruch 14, **dadurch gekennzeichnet, daß** die kundenspezifischen Verbrauchs-Schwellwerte aus einer Statistik des Verbrauchsverhaltens des jeweiligen Kunden im vorangegangenen Abrechnungszeitraum ermittelt werden.

## Claims

1. Device for displaying charges on a telecommunications (TK) terminal (1) with a computer (17) for determining the charges and a display unit (6) for displaying the charges established, a calculation module (5) for calculating a customer-specific rate being provided that is designed so that it calls up customer-specific parameter data from a first data memory (7) and specifiable rate algorithms from a separate program memory (10), and that with these it calculates a current charge for an individual TK connection and supplies corresponding information signals to the display unit (6), the first data memory (7) with the customer-specific parameter data and/or the program memory (10) with the specifiable rate algorithms being located separately from the calculation module (5), and the parameter data and/or the rate algorithms being transferable as rate information to the calculation module (5) via a TK network (3), **characterized in that** the device is designed so that the transfer only takes place in the event of changes in the rate information, and the rate information can be stored in the interim in the calculation module (5) and can be called up therefrom each time a connection is established.

2. Device according to claim 1, **characterized in that** the calculation module is integrated in the TK terminal.

3. Device according to claim 1, **characterized in that** the calculation module (5) is located separately from the TK terminal (1).

4. Device according to claim 3, **characterized in that** a separate display unit (6) connected to the calculation module (5) is provided for displaying the charges established, which is not integrated into the TK terminal (1).

5. Device according to one of the preceding claims, **characterized in that** the first data memory (7) with the customer-specific parameter data is integrated as a customer module in the calculation module (5).

6. Device according to claim 5, **characterized in that** the customer module is exchangeable.

7. Device according to claim 5 or 6, **characterized in that** the first data memory (7) is a read-only memory.

8. Device according to claim 5 or 6, **characterized in that** the first data memory (7) can be overwritten by information signals from a TK network (3).

9. Device according to claim 8, **characterized in that** the first data memory (7) is in the form of a magnetic tape cassette (cartridge).

10. Device according to claim 8, **characterized in that** the first data memory (7) is in the form of a chip card.

11. Device according to one of claims 5 to 10, **characterized in that** the customer module is in the form of a chip card in which a customer rate computer (17) in particular is integrated.

12. Device according to one of the preceding claims, **characterized in that** the program memory (10) is constructed from various modulators, in particular from a distance-dependent modulator (11) and/or a volume-dependent modulator (12) and/or a rate packet modulator (13) and/or a target-dependent modulator (14) and/or a time-dependent modulator (15).

13. Device according to one of the preceding claims, **characterized in that** a counter (9) is provided to determine the total charges accumulated by the TK terminal (1) in an accounting period.

14. Device according to claim 13, **characterized in that** customer-specific usage threshold values can be called up from the first data memory (7), which when exceeded permit more favourable customer-specific rates to be used for calculating the current charges.

15. Device according to one of the preceding claims, **characterized in that** a device (8) for call number analysis is provided.

16. Device according to claim 15, **characterized in that** customer-specific target call numbers can be called up from the first data memory (7), which when dialled by the TK terminal (1) cause a more favourable customer-specific rate to be applied than for other target call numbers.

17. Device according to one of the preceding claims, **characterized in that** a further data memory (16) is provided, from which parameter data that are valid for all subscribers to the TK network (3) can be called up, for example, distance of the connections, rate packets, time, date etc.

18. TK terminal (1) with a device for displaying charges according to one of the preceding claims, a calculation module (5) being provided for calculation of a customer-specific rate, **characterized in that** means are provided for receiving customer-specific parameter data and/or rate algorithms from memories (7, 10) located separately, which can be transmitted to the calculation module (5) via a TK network (3).

19. Method for operating a device for displaying charges on a telecommunications (TK) terminal (1), which device has a computer (17) for determining the charges and a display unit (6) for displaying the charges established, a calculation module (5) that is used to calculate a customer-specific rate calling up customer-specific parameter data from a first data memory (7) and specifiable rate algorithms from a separate program memory (10) in the method, the calculation module calculating a current charge with these for an individual TK connection and supplying corresponding information signals to the display unit (6), and parameter data and/or the rate algorithms being transferred as rate information from the first data memory (7) with the customer-specific parameter data and/or the program memory (10) with the specifiable rate algorithms via a TK network (3) to the calculation module (5), which is located separately, **characterized in that** the transfer only takes place in the event of changes in the rate information, and that the rate information is stored in the calculation module (5) in the interim such that it can be called up therefrom each time a connection is established.

20. Method according to claim 19 for operating a device according to one of claims 8 to 11, **characterized in that** changed customer-specific parameter data are downloaded automatically from a central computer (4) to the customer module via the TK network (3).

21. Method according to claim 19 or 20 for operating a device according to claim 14, **characterized in that** the customer-specific usage threshold values are determined from statistics of usage by the respective customer in a preceding accounting period.

## Revendications

1. Dispositif d'affichage de taxation dans un terminal de télécommunication (TK) (1) avec un calculateur (17) pour la détermination de la taxation et une unité d'affichage (6) pour l'affichage des taxes déterminées, moyennant quoi un module de calcul (5) pour le calcul d'un tarif spécifique au client est prévu, qui est conçu de manière à ce qu'il puisse interroger des données de paramètres spécifiques au client à partir d'une première mémoire de données (7) et des algorithmes de tarifs prédéfinissables à partir d'une mémoire de programme (10) séparée et à ce qu'il puisse ainsi calculer un paiement réel pour une liaison TK individuelle et amener des signaux d'informations correspondants à l'unité d'affichage (6), moyennant quoi la première mémoire de données (7) avec les données de paramètres spécifiques au client et/ou la mémoire de programme (10) avec les algorithmes de tarifs prédéterminables est éloignée du module de calcul (5) et que les données de paramètres et/ou les algorithmes de tarifs peuvent être transmis, comme information tarifaire, au module de calcul (5) par un réseau TK (3), **caractérisé en ce que** le dispositif est conçu de manière à ce que la transmission se fasse simplement en cas de modifications de l'information tarifaire et que l'information tarifaire puisse, entre-temps, être mémorisée dans le module de calcul (5) et extraite du module à chaque fois qu'une liaison est établie.

2. Dispositif selon la revendication 1, **caractérisé en ce que** le module de calcul est intégré dans le terminal TK (1).

3. Dispositif selon la revendication 1, **caractérisé en ce que** le module de calcul (5) est installé séparément du terminal TK (1).

4. Dispositif selon la revendication 3, **caractérisé en ce qu'**une unité d'affichage (6) séparée raccordée au module de calcul (5) pour l'affichage de la taxation déterminée qui n'est pas intégrée dans le terminal TK (1).

5. Dispositif selon l'une des revendications précédentes , **caractérisé en ce que** la première mémoire de données (7) avec les données de paramètres spécifiques au client est intégrée comme module client dans le module de calcul (5).

6. Dispositif selon la revendication 5, **caractérisé en ce que** le module client est remplaçable.

7. Dispositif selon la revendication 5 ou 6, **caractérisé en ce que** la première mémoire de données (7) est une mémoire fixe.

8. Dispositif selon la revendication 5 ou 6, **caractérisé en ce que** la première mémoire de données (7) peut être écrasée par des signaux d'informations provenant d'un terminal TK (3).

9. Dispositif selon la revendication 8, **caractérisé en ce que** la première mémoire de données (7) se présente sous forme d'une cassette de bande magnétique (cartouche).

10. Dispositif selon la revendication 8, **caractérisé en ce que** la première mémoire de données (7) se présente sous forme d'une carte à mémoire.

11. Dispositif selon l'une des revendications 5 à 10, **caractérisé en ce que** le module client se présente sous forme d'une carte à mémoire dans laquelle est intégré, en particulier, un calculateur de tarif client (17).

12. Dispositif selon l'une des revendications précédentes, **caractérisé en ce que** la mémoire de programme (10) est constituée de divers modulateurs, en particulier d'un modulateur dépendant de la distance (11) et/ou d'un modulateur dépendant du volume (12) et/ou d'un modulateur de produits tarifaires (13) et/ou d'un modulateur dépendant de la destination (14) et/ou d'un modulateur dépendant du temps (15).

13. Dispositif selon l'une des revendications précédentes, **caractérisé en ce qu'**un dispositif de comptage (9) est prévu pour la détermination de la somme à payer pendant une durée de calcul du terminal TK (1).

14. Dispositif selon la revendication 13, **caractérisé en ce que** des valeurs-seuils de consommation spécifiques au client peuvent être extraites de la première mémoire de données (7), après le dépassement desquelles des tarifs spécifiques au client plus avantageux sont mis en application pour le calcul du paiement réel.

15. Dispositif selon l'une des revendications précédentes, **caractérisé en ce qu'**un dispositif (8) pour l'analyse des numéros appelés est prévu.

16. Dispositif selon la revendication 15, **caractérisé en ce que** des numéros d'appel spécifiques au client peuvent être extraits de la première mémoire de données (7), pour la composition desquels par le terminal TK (1) un tarif spécifique au client plus avantageux que pour tous les autres numéros d'appel est mis en application.

17. Dispositif selon l'une des revendications précédentes, **caractérisé en ce qu'**il est prévu une autre mémoire de données (16) de laquelle des données de paramètres valables en commun pour tous les utilisateurs du réseau TK (3) peuvent être extraites, par exemple, l'éloignement de la liaison, les produits tarifaires, l'heure, la date, etc...

18. Terminal TK (1) avec un dispositif d'affichage de taxation selon l'une des revendications précédentes, moyennant quoi un module de calcul (5) est prévu pour le calcul d'un tarif spécifique au client, **caractérisé en ce que** des moyens sont prévus pour réceptionner les données de paramètres spécifiques au client et/ou les algorithmes de tarif à partir de mémoires (7, 10) disposées à distance les unes des autres, qui peuvent être communiqués au module de calcul (5) par un réseau TK (3).

19. Procédé pour faire fonctionner un dispositif d'affichage de taxation dans un terminal de télécommunication (TK) (1) qui comporte un calculateur (17) pour la détermination de la taxation et une unité d'affichage (6) pour l'affichage des taxes déterminées, moyennant quoi, selon le procédé, un module de calcul (5), qui sert à calculer un tarif spécifique au client, extrait des données de paramètres spécifiques au client d'une première mémoire de données (7) et des algorithmes de tarif prédéterminables d'une mémoire de programme séparée (10), le module de calcul calcule ainsi un paiement réel pour une liaison TK individuelle et achemine des signaux d'information correspondants à l'unité d'affichage (6) et les données de paramètres et/ou les algorithmes de tarif, sous forme d'information tarifaire, sont transmis par un réseau TK (3) à partir de la première mémoire de données (7), avec les données de paramètres spécifiques au client, et/ou à partir de la mémoire de programme (10), avec les algorithmes de tarif prédétermibales, au module de calcul (5) qui est éloigné, **caractérisé en ce que** la transmission se fait simplement en cas de modifications de l'information tarifaire et **en ce que** l'information tarifaire peut, entre-temps, être mémorisée dans le module de calcul (5) de manière à pouvoir être extraite du module à chaque fois qu'une liaison est établie.

20. Procédé selon la revendication 19 pour faire fonctionner un dispositif selon l'une des revendications 8 à 11, **caractérisé en ce que** des données de paramètres spécifiques au client modifiées sont chargées automatiquement à partir d'un calculateur central (4) dans le module de calcul par l'intermédiaire du réseau TK (3).

21. Procédé selon la revendication 19 ou 20 pour faire fonctionner un dispositif selon la 14, caractérisé en ce les valeurs-seuils de consommation spécifiques au client sont déterminées à partir d'une statistique du profil de consommation de chaque client pendant la période de calcul précédente.
